# EUROPÄISCHE PATENTANMELDUNG

(11) **EP 3 056 501 A1**
(43) Veröffentlichungstag der Anmeldung: **17.08.2016**
(21) Anmeldenummer: 15155015.9
(22) Anmeldetag: 13.02.2015
(51) Int. Cl.: C07F 7/28, C01G 23/04, C01G 23/053, B01J 29/89, C01B 37/00

(54) **Titanathaltige, wässerige Lösung und Dispersion**

(71) Anmelder: Evonik Degussa GmbH, 45128 Essen (DE)
(72) Erfinder: Lortz, Wolfgang, 63607 Wächtersbach (DE); Wombacher, Willibald, 63867 Johannesberg (DE); Heberer, Stefan, 63073 Offenbach (DE); Busker, Eberhard, 63517 Rodenbach (DE)

(57) **Zusammenfassung**

Wässerige Tetra-n-propylammoniumtitanat enthaltende Lösung.

Sie wird hergestellt, indem man zu einer wässerigen, Tetra-n-propylammoniumhydroxid enthaltenden Lösung ein Titanalkoxid zudosiert und nachfolgend soviel Alkohol aus dem Reaktionsgemisch abdestilliert bis der Anteil an TiO₂ 10 bis 25 Gew.-% beträgt.

Dispersion enthaltend Tetra-n-propylammoniumtitanat, Tetra-n-propylammoniumhydroxid, pyrogene Kieselsäure und Wasser.

Verfahren zur Herstellung eines titanhaltigen Zeolithen durch thermsiche Behandlung der Dispersion.

Verfahren zur Herstellung eines Titandioxidsoles, bei dem man die erfindungsgemäße Lösung auf einen pH-Wert von 2 bis 8 einstellt und nachfolgend thermisch behandelt.

## Beschreibung

Die Erfindung betrifft eine titanathaltige, wässerige Lösung und deren Herstellung. Die Erfindung betrifft weiterhin eine die titanathaltige Lösung und pyrogene Kieselsäure enthaltende Dispersion. Die Erfindung betrifft auch die Herstellung eines Titandioxidsoles aus der titanathaltigen Lösung.

In WO2004/087578 wird ein Verfahren zur Herstellung einer neutralen, wasserbasierten Titandioxid-Kolloidlösung offenbart, bei dem man eine Titanverbindung und einen Stabilisator zu Wasser gibt und nachfolgend mit einer basischen, eine Alkyl-Ammonium-Gruppe enthaltenden Verbindung neutralisiert. Die neutralisierte Lösung wird nachfolgend auf eine Temperatur von über 85°C erhitzt um die Titandioxid-Kolloidlösung zu erhalten. Zwingend bei diesem Verfahren ist der Einsatz eines Stabilisators.

In EP-A-2366667 wird ein Verfahren zur Herstellung eines Titandioxid-Soles offenbart, bei dem man eine Lösung enthaltend ein Titanalkoxid, eine organische Säure und quartären Ammoniumhydroxid auf 50 bis 100°C erhitzt und nachfolgend in einer hydrothermalen Reaktion in das Titandioxid-Sol umwandelt. Auch bei diesem Verfahren ist der Einsatz von Stabilisatoren, nämlich organischer Säuren, zwingend. Ti liegt bezüglich des quartären Ammouniumhydroxides im Überschuss vor.

In EP-A-1868012 wird ein Beschichtungsmittel für ein optisches Instrument beschrieben, welches unter Bedingungen erhalten wird, bei denen eine oder mehrere Titanalkoxide, Salze einer stickstoffhaltigen organischen Base und Wasser gleichzeitig vorhanden sind. Die stickstoffhaltige organische Base ist ausgewählt aus der Gruppe bestehend aus primären Aminen, sekundären Aminen, tertiären Aminen und quaternären Ammoniumhydroxid. Das Molverhältnis Titanquelle zu stickstoffhaltiger organischer Base wird bevorzugt so eingestellt, dass Ti/Base 0,01 bis 10 ist, die Base also im Unter- wie auch im Überschuss eingesetzt werden kann. Auch hier werden stabile, titanhaltige Sole nur in Gegenwart von Stabilisatoren wie Glykolsäure, Milchsäure, Mandelsäure, Äpfelsäure, Citronensäure, Glycerinsäure und Weinsäure erhalten.

In EP-A-1162174 wird ein Verfahren zur Herstellung einer titanhaltigen, wässrigen Lösung offenbart, bei dem ein Titanalkoholat mit Wasser in Anwesenheit von Ammoniak oder eines Amines umgesetzt wird. Wird Ammoniak oder ein primäres Amin eingesetzt so ist die Zugabe eines Stabilisierungsmittels erforderlich. Dies kann ein alpha-Diketon, beta-Diketon, alpha-Hydroxyketon oder eine Carbonsäure sein. Bevorzugt ist eine Verhältnis Amin/Titanalkoholat von 0,5:1 - bis 5:1.

In Chem. Mater. 2002, 14, 3082-3089 wird die Synthese kolloidaler Titanatlösungen beschrieben, bei der Titanalkoxide mit Alkylaminen oder Alkylammoniumhydroxiden mit R₄N⁺OH⁻, mit R = Methyl oder n-Butyl umgesetzt werden, wobei das Verhältnis R₄N⁺OH⁻/ Titanalkoxid >0,5 - 1 ist. Abhängig von den Reaktionsbedingungen werden aus diesen Lösungen Niederschläge der Zusammensetzung [R₄N]⁺[HTiₘO₂ₘ₊₁]⁻ mit m = 4 - 7 erhalten. Die kolloidale Lösung wird hierbei als transparent definiert, wobei beim Durchleuchten der Lösung mit einem He-Ne-Laser deutlich der Durchgang des Laserlichtes durch beobachtet werden kann, also Partikel in der Lösung vorliegen.

Titan-Silicium-Verbindungen werden vielfach als Katalysatoren eingesetzt. Speziell Titansilikalite werden industriell als Oxidationskatalysatoren und Epoxidationskatalysatoren eingesetzt. In US4410501 wird eine Herstellung von Titansilikalit mittels Hydrothermalsynthese offenbart. Dabei werden Tetraalkylorthosilicat als Siliciumquelle und Tetraalkylorthotitanat als Titanquelle mit einem tetrasubstituierten Ammoniumhydroxid als strukturbestimmender Komponente in Gegenwart von Wasser hydrolysiert.

In DE-A-19623972 wird ein Verfahren zur Herstellung von Titansilikaliten durch HydrothermalSynthese offenbart, bei dem man pyrogene Kieselsäure, eine dreiwertige, hydrolysierbare Titanverbindung und ein tetrasubstituiertes Ammoniumhydroxid zur Reaktion bringt. Als dreiwertige Titanverbindung kommen TiX₃ mit X = Cl, Br, I, OCH₃ oder TiX₃·3L (mit X = Cl, Br, I und L = Tetrahydrofuran, Dioxan, Aceton, Formamid, Dimethylformamid, Acetonitril, Pyridin), oder X₃TiL₆ mit X = F, Cl, Br, I, NCS und L = NH₃, NAlkyl₃, Pyridin, Harnstoff, Ti₂(SO₄)₃·6NH₃, NaTi(SO₄)₂·2.5H₂O, CsTi(SO₄)₂·12H₂O, Titan(III)metaphosphat, Ammonium- und Kaliumtitan(III)formiat, Natriumtitan(III)acetat, Ammonium- und Kaliumtitan(III)oxalat.

Beide Verfahren haben den Nachteil, dass Hydrolyseprodukte und Fremdionen die Herstellung des Titansilikaliten störanfällig machen.

In der DE-A-19624340 wird ein Verfahren offenbart, bei dem pyrogene Silicium-Titanmischoxide bei der Hydrothermalsynthese eingesetzt werden. Somit werden die oben genannten Nachteile vermieden, jedoch ist das eingesetzte Material teuer.

Die technische Aufgabe der vorliegenden Erfindung war es daher einen alternativen Einsatzstoff für die Herstellung von Titansilikalit bereitzustellen.

Es wurde nun gefunden, dass Tetra-n-propylammoniumtitanat ein solcher alternativer Einsatzstoff ist.

Gegenstand der Erfindung ist eine wässerige, Tetra-n-propylammoniumtitanat enthaltende Lösung.

Der Anteil an Tetra-n-propylammoniumtitanat, gerechnet als TiO₂, beträgt bevorzugt 5 - 35 Gew.-%, und besonders bevorzugt 10 bis 30 Gew.-%. Bei der wässerigen Lösung handelt es sich um eine Lösung, bei der, wenn mit einem Laser mit einer Wellenlänge von 530 nm und einer Leistung von < 1 mW durchleuchtet, der Durchgang des Laserlichtes nicht beobachtet werden kann. Die Lösung ist wenigstens über einen Zeitraum von 6 Monaten bei Raumtemperatur stabil, das heißt beim Durchleuchten der Lösung mit einem Laser mit einer Wellenlänge von 530 nm und einer Leistung von < 1 mW wird beim Durchgang des Laserlichtes durch die Lösung kein Tyndall-Effekt beobachtet.

Die erfindungsgemäße Lösung weist chelatbildende Substanzen maximal in solchen Mengen auf, die nicht zur Stabilisierung der Lösung ausreichen. In der Regel sind dies weniger als 0,1 Gew.-%. Bevorzugt enthält die Lösung weniger als 0,01 Gew.-% Chelat bildender Substanzen. In einer besonderen Ausführungsform ist die wässerige Lösung frei von chelatbildenden Substanzen. Beispiele chelatbildender Substanzen sind Ketone, alpha-Hydroxyketone, beta-Hydroxyketone und Carbonsäuren.

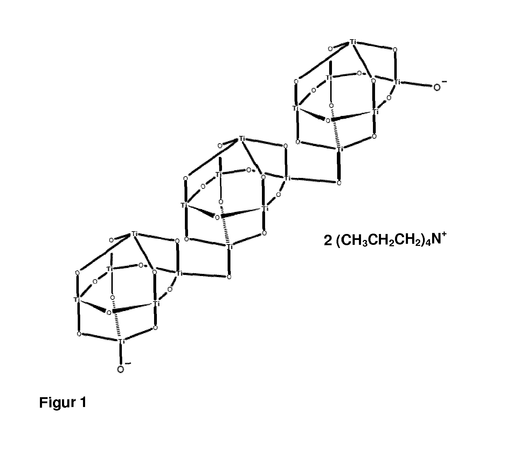

In einer besonderen Ausführungsform umfasst das Tetra-n-propylammonium-titanat Verbindungen der Zusammensetzung 2(CH₃)₂CH₂CH₂)₄N⁺ Ti₁₈O₃₇²⁻. Der Nachweis von Anion und Kation erfolgt mit Hilfe der Elektrosprayionisation und der Detektion mittels Massenspektrometrie. Figur 1 zeigt eine Struktur für diese Zusammensetzung.

Weiterhin kann die erfindungsgemäße Lösung Tetra-n-propylammonium-hydroxid enthalten. Besonders bevorzugt enthält sie 15 bis 30 Gew.-%, bezogen auf die Lösung.

Der pH-Wert der erfindungsgemäßen Lösung ist alkalisch. Bevorzugt ist, dass der pH-Wert mindestens 12, besonders bevorzugt 12 bis 14,5, ist.

Weiterhin kann die erfindungsgemäße Lösung Alkohol enthalten. Beispielhaft seien Methanol, Ethanol, n-Propanol, iso-Propanol, n-Butanol oder iso-n-Butanol sein. In der Regel ist es vorteilhaft, dass der Gehalt an Alkohol nicht mehr als 1 Gew.-%, besonders bevorzugt nicht mehr als 0,1 Gew.-%, jeweils bezogen auf die Lösung, beträgt.

Ein weiterer Gegenstand der Erfindung ist ein Verfahren zur Herstellung der wässerigen Lösung, bei dem man zu einer wässerigen, Tetra-n-propylammoniumhydroxid enthaltenden Lösung, die eine Temperatur von bevorzugt 30 bis 50°C aufweist, unter Bewegung Ti(OR)₄ mit R= CH₃, C₂H₅ oder C₃H₇ zudosiert, die Temperatur der exothermen Reaktion in einem Bereich von bevorzugt 50 bis 70°C hält, und nachfolgend das Reaktionsgemisch im Vakuum Alkohol ROH aus dem Reaktionsgemisch abdestilliert.

Es kann nun soviel Alkohol abdestilliert werden, bis der Anteil an Tetra-n-propylammoniumtitanat, gerechnet als TiO₂, 5 bis 35 Gew.-%, besonders bevorzugt 10 bis 30 Gew.-%, beträgt.

Das Vakuum beträgt bevorzugt 20 bis 300 mbar und besonders bevorzugt 120 bis 160 mbar. ROH wird bevorzugt bei einer Temperatur von 40 bis 60°C abdestilliert.

Dabei ist es vorteilhaft, die Einsatzstoffe Ti(OR)₄ und Tetra-n-propylammoniumhydroxid in einem molaren Verhältnis einzusetzen, dass Ti/N 1,5:1 - 3:1 beträgt.

Weiterhin kann es vorteilhaft sein, durch wiederholte Zuführung von Wasser und nachfolgender Destillation, den Anteil an ROH auf weniger 0,1 Gew.-% zu senken.

Ein weiterer Gegenstand der Erfindung ist eine Dispersion enthaltend Tetra-n-propylammoniumtitanat, Tetra-n-propylammoniumhydroxid, pyrogene Kieselsäure und Wasser.

Dabei ist das molare Verhältnis von pyrogener Kieselsäure, als SiO₂, zu Tetra-n-propylammoniumtitanat, als TiO₂, bevorzugt 90:10 bis 99:1 und besonders bevorzugt 94:6 bis 98:2. Weiterhin gilt, dass das molare Verhältnis von pyrogener Kieselsäure, als SiO₂ zu Tetra-n-propylammoniumhydroxid bevorzugt 80:20 bis 90:10 und das molare Verhältnis von pyrogener Kieselsäure, als SiO₂, zu Wasser bevorzugt 90:10 bis 97:3 ist.

Der pH-Wert der erfindungsgemäßen Dispersion beträgt bevorzugt 10 bis 14.

Ein weiterer Gegenstand der Erfindung ist ein Verfahren zur Herstellung der erfindungsgemäßen Dispersion, bei dem man Tetra-n-propylammoniumtitanat in Form der erfindungsgemäßen, wässerigen Lösung einsetzt.

Die eingesetzte pyrogene Kieselsäure weist bevorzugt eine BET-Oberfläche von 200 bis 400 m²/g auf. Besonders bevorzugt ist eine BET-Oberfläche von 250 bis 350 m²/g. Solche pyrogenen Kieselsäuren sind kommerziell erhältlich, beispielsweise AEROSIL® 300, Evonik Industries.

In einer bevorzugten Ausführungsform wird die pyrogene Kieselsäure in Form einer Tetra-n-propylammoniumhydroxid enthaltenden Dispersion eingesetzt. Bei dieser Dispersion handelt es sich nicht um die erfindungsgemäße Dispersion, da der Bestandteil Tetra-n-propylammoniumtitanat fehlt. Ein Gehalt an pyrogener Kieselsäure in der Vordispersion von 10 bis 30 Gew.-% hat sich bewährt.

Weiterhin hat sich eine Ausführungsform bewährt, bei der der mittlere Partikeldurchmesser der Kieselsäurepartikel in der Vordispersion nicht mehr als 200 nm, besonders bevorzugt 50 bis 150 nm, beträgt.

Eine besondere Ausführungsform zur Herstellung der erfindungsgemäßen Dispersion sieht vor, dass man
a) zu einer aus einer Vorlage über eine Rotor-/ Statormaschine im Kreis geführten flüssigen Phase aus Wasser und Tetra-n-propylammoniumhydroxid, das in einer Menge vorliegt, dass der pH-Wert 10 bis 12 ist,
b) über eine Einfüllvorrichtung bei laufender Rotor-/ Statormaschine eine solche Menge pyrogener Kieselsäure in die Scherzone zwischen den Schlitzen der Rotorzähne und der Statorschlitze einbringt, dass eine Dispersion mit einem Gehalt an pyrogener Kieselsäure von 10 bis 30 Gew.-% resultiert, wobei man den pH-Wert durch kontinuierliche, weitere Zugabe von Tetra-n-propylammoniumhydroxid auf 10 bis 12 hält, und
c) man nachdem alle pyrogene Kieselsäure zugegeben ist, die Einfüllvorrichtung schließt und so weiterschert, dass die Scherrate im Bereich zwischen 10000 bis 40000 s⁻¹ liegt, und
d) anschließend gegebenenfalls Wasser und/oder weiteres Tetra-n-propylammoniumhydroxid hinzugibt um den Gehalt an pyrogener Kieselsäure und den pH-Wert einzustellen und nachfolgend
e) unter Rühren die erfindungsgemäße Lösung in einer Menge hinzufügt, dass das molare Verhältnis SiO₂/TiO₂ 90:10 bis 99:1, das molare Verhältnis SiO₂/Tetra-n-propylammoniumhydroxid 80:20 bis 90:10 und das molare Verhältnis Wasser/SiO₂ 90:10 bis 97:3 ist.

Ein weiterer Gegenstand der Erfindung ist ein Verfahren zur Herstellung eines titanhaltigen Zeolithen, bei dem man die erfindungsgemäße Dispersion thermisch behandelt. Die thermische Behandlung umfasst eine hydrothermale Umsetzung einer Temperatur von 25 und 200°C. Die hydrothermale Umsetzung wird solange durchgeführt, bis bei der gegebenen Reaktionstemperatur die Einsatzstoffe pyrogene Kieselsäure und die erfindungsgemäße Lösung in den titanhaltigen Zeolithen überführt worden sind. Die Reaktionszeit hierfür kann 1 bis 50 Stunden betragen. Der titanhaltige Zeolith wird nach einem Waschprozess in der Regel bei Temperaturen von 300 bis 1000°C kalziniert.

Ein weiterer Gegenstand der Erfindung ist ein Verfahren zur Herstellung eines Titandioxidsoles, bei dem man die erfindungsgemäße Lösung thermisch behandelt. Hierzu wird die erfindungsgemäße Lösung bevorzugt auf einen pH-Wert von 2 bis 8, besonders bevorzugt 3 bis 5 eingestellt und ein komplexierendes Mittel, bevorzugt in Form einer Hydroxycarbonsäure oder einer Phsophonsäure hinzugefügt. Besonders bevorzugt ist Zitronensäure. Die thermische Behandlung umfasst eine hydrothermale Umsetzung einer Temperatur von 25 und 200°C.

### Beispiele

### Beispiel 1: Herstellung einer Tetra-n-propylammoniumtitanat enthaltenden Lösung

In einer 500 I fassenden Vakuum-Destillationsblase 167 kg Tetra-n-propylammoniumhydroxid-Lösung (40%ig) und 90 kg Wasser vorgelegt. Es wird mit Stickstoff inertisiert und das Gemisch durch externe Beheizung auf eine Temperatur von 40°C gebracht. Jetzt werden unter Rühren 142 kg Ti(OC₂H₅)₄ innerhalb von 15 Minuten zudosiert. Die Temperatur steigt dabei auf 65°C. Anschließend wird bei dieser Temperatur 1 Stunde nachreagieren lassen.

Nachfolgend wird die Anlage auf 140 mbar evakuiert und die Temperatur zunächst bei 40°C gehalten. Die Destillationsgeschwindigkeit beträgt maximal 30 l/h. Um diese Destillationsgeschwindigkeit zu halten, wird schrittweise die Temperatur bis auf maximal 60°C erhöht. Nachdem 141 kg abdestilliert wurden wird abgekühlt und der Ethanolgehalt und der Feststoffgehalt als TiO₂ durch Bestimmung des Glührückstandes (1 h bei 1000 °C) bestimmt: 19,3 Gew.-% TiO₂, 2,2 Gew.- % Ethanol.

Um den Ethanolgehalt weiter zu senken werden zum Ansatz 100 kg Wasser gegeben und 94 kg aus dem Gemisch abdestilliert. Die Ausbeute an Lösung beträgt nun 258 kg mit 18,8 Gew.-% TiO₂, 25,5 Gew.-% Tetra-n-propylammoniumhydroxid und < 0,1 Gew.-% Ethanol.

Der Nachweis der Anionen und der Kationen erfolgt mit Hilfe der Elektrosprayionisation und massenspektrometrischen Detektion.

Instrument: Massenspektrometer LTQ FT Ultra (ThermoFisher); Ionisation: ESI, Anionen und Kationen Modus; Massenbereich: 150 -2000 u; Massenauflösung: R(m/z 400) = 100000.

Die Lösung wird mit Methanol um den Faktor 100 verdünnt und mit Hilfe der Spritzen-infusion innerhalb weniger Minuten vermessen. Der MS Detektor ist ein Tandemmassenspektrometer mit einer niederauflösenden Ionenfalle zum Sammeln der Ionen und einem hochauflösenden lonencyclotronspektrometer für die Präzisionsanalyse, das mit einer Massenauflösung von R=100000 eingesetzt wird.

Das Lösemittel Methanol erleichtert das Versprühen der Probe und unterstützt die Freisetzung von Ionen im starken elektrischen Feld. Es werden Messungen mit beiden Polaritäten durchgeführt. Das Kationenspektrum zeigt nur die Tetrapropylammoniumionen.

Das Anionenspektrum ist sehr linienreich. Bei hoher Spreizung werden Signalabstände der Isotopen von überwiegend 0,5 u beobachtet, woraus auf einen zweifachen Ladungszustand geschlossen werden kann.

In den ICR Messungen werden auch dreifache und vierfache Ladungszustände beobachtet, allerdings mit deutlich niedriger Intensität. Für die Ableitung der Molgewichte der Neutralteilchen müssen die m/z Werte mit dem Ladungszustand multipliziert und um die Zahl der abgespaltenen Protonen erhöht werden.

Die zahlreichen Isotope geben einen klaren Beweis für das Vorliegen von Titanationen. Die Masse der Ionen im Bereich von 700-900 u kann man durch das Vorliegen von Trimeren des ungeladenen oktaedrischen Hexatitanats der Summenformel Ti₁₈O₃₇H₂.

Durch schrittweise Solvolyse mit dem Lösungsmittel Methanol werden Ti-O-Ti-Bindungen aufgespalten, so dass sich die Molmassen jeweils um 32u bzw. 46u erhöhen.

### Beispiel 2: Herstellung einer Dispersion enthaltend pyrogene Kieselsäure, Tetra-n-propylammoniumhydroxid und Wasser

In einem 100 I Edelstahl-Ansatzbehälter werden 38 I Wasser und 0,253 kg Tetra-n-propylammoniumhydroxid-Lösung (40 Gew.-%) in einem 100 I Ansatzbehäter vorgelegt, es resultiert ein pH von 12,4. Nun werden mit Hilfe des Saugrüssels der Ystral Conti-TDS 3 (Statorschlitze: 6 mm Kranz und 1 mm Kranz, Rotor/Stator-Abstand ca. 1 mm) unter Scherbedingungen 20,6 kg AEROSIL® 300, Evonik eingezogen. Dabei wird während des Einsaugens durch weitere Zugabe von Tetra-n-propylammoniumhydroxid der pH-Wert zwischen 10 und 11 gehalten. Nach Beendigung des Einziehens wird der Einsaugstutzen geschlossen, der pH mit Tetra-n-propylammoniumhydroxid auf 11 eingestellt. Diese Vordispersion weist einen Feststoffgehalt von 32 Gew.-% auf. Sie wird bei 3000 U/min 30 min lang nachgeschert. Einer unerwünschten Aufwärmung der Dispersion durch den hohen Energieeintrag wird durch einen Wärmetauscher begegnet und der Temperaturanstieg auf max. 30°C beschränkt. Um eine hohe Lagerstabilität sicherzustellen, wird mit 29,0 kg Wasser verdünnt, durchmischt und noch einmal mit etwas Tetra-n-propylammoniumhydroxid der pH-Wert von 11,0 nachgestellt.

Der mittlere Aggregatdurchmesser beträgt 79 nm, bestimmt mit Horiba LA 910.

Die Dispersion weist folgende Zusammensetzung auf:

| Wasser | SiO₂ | Tetra-n-propylammoniumhydroxid | Summe | |
|---|---|---|---|---|
| 70,12 | 20,6 | 2,08 | 92,8 | kg |
| 75,6 | 22,2 | 2,2 | 100,0 | Gew.-% |
| 3,896 | 0,343 | 0,011 | 4,250 | kmol |

### Beispiel 3: Herstellung einer Dispersion enthaltend pyrogene Kieselsäure, Tetra-n-propylammoniumtitanat, Tetra-n-propylammoniumhydroxid und Wasser

In einem Polyethylenbecherglas werden 97,0 g einer Tetra-n-propylammoniumhydroxid -Lösung (40 Gew.-% in Wasser), 86,4 g entionisiertes Wasser vorgelegt und unter Rühren 484,6 g der Dispersion aus Beispiel 2 und 20,11 g Tetra-n-propylammoniumhydroxid-Titanat-Lösung hinzugegeben. Die Dispersion weist folgende Zusammensetzung auf:

| Wasser | SiO₂ | Tetra-n-propylammoniumhydroxid | TiO₂ | Summe | |
|---|---|---|---|---|---|
| 521,9 | 107,6 | 54,8 | 3,8 | 688,1 | g |
| 75,85 | 15,63 | 7,97 | 0,55 | 100 | Gew.-% |
| 4,2140 | 0,2606 | 0,0392 | 0,0069 | | mol |

Das molare Verhältnis SiO₂/TiO₂ ist 97,4:2,6. Das molare Verhältnis SiO₂/ Tetra-n-propylammoniumhydroxid ist 86,9: 13,1. Das molare Verhältnis Wasser/SiO₂ ist 94,2:5,8.

### Beispiel 4: Herstellung eines titanhaltigen Zeolithen

Die resultierende Mischung wird zunächst 2 Stunden bei 80°C unter intensivem Rühren gealtert und anschliessend 10 Stunden bei 180°C in einem Autoklaven kristallisiert. Der erhaltene Feststoff wird durch Zentrifugieren von der Mutterlauge abgetrennt, dreimal mit je 250 ml Wasser gewaschen, bei 90°C getrocknet und in Luftatmosphäre 4 Stunden bei 550°C calciniert. Das Röntgendiffraktogramm der erhaltenen Kristalle zeigt das für die MFI-Struktur typische Beugungsmuster, das IR-Spektrum die charakteristische Bande bei 960 cm-1. Das UV-Vis-Spektrum zeigt, dass die Probe frei von Titandioxid und Titanat ist.

### Beispiel 5: Epoxidierung von Propylen mit wässeriger Wasserstoffperoxidlösung

Es wird die gleiche Aktivität wie in Beispiel 1 in EP-A-814058 erhalten. Die katalytische Testung erfolgte wie in EP 0814058 B1, Beispiel 2 beschrieben.

Im Gegensatz zu EP-A-814058 muß nicht ein spezielles pyrogen erzeugtes Mischoxid eingesetzt werden. Vielmehr kann eine kostengünstigere pyrogene Kieselsäure eingesetzt werden. Als Ti-Komponente wird die erfindungsgemäße Titanat-Lösung eingesetzt.

### Beispiel 6: Herstellung eines Titandioxidsols

In einem 10 I Polyethylenbecherglas werden 5000 g Wasser unter Rühren mit 2900 g Tetra-n-propylammoniumtitanat aus Beispiel 1, entsprechend 6,83 mol TiO₂ und 3,64 mol Tetra-n-propylammoniumhydroxid, vermischt. Nun werden unter Rühren 909 g, 1,42 mol, Zitronensäurelösung (30 Gew.%) hinzugegeben. Durch Zugabe von verdünnter Salpetersäure (10 Gew.-%) wird ein pH-Wert von 4,0 eingestellt. Nach einer halben Stunde unter Rühren wird der pH-Wert kontrolliert und mit verdünnter Salpetersäure gegebenenfalls wieder auf pH 4 korrigiert.

Nun wird die Mischung in einer verschlossenen Flasche bei 85°C gelagert. Die Bildung des Titandioxidsols wird durch Bestimmung der Extinktion bei 386 nm verfolgt. Nach 12 Tagen ist die Extinktion auf einen konstant niedrigen Wert gesunken der anzeigt, dass nun nur noch partikuläres Titandioxidsols vorliegt. Der Gehalt an Titandioxid beträgt 6 Gew.-%.

Zur Bestimmung der Extinktion bei 386 nm werden 20 mg Gemisch mit 1 g H₂O₂ (1,5 Gew.-%), 1 g Oxalsäurelösung (5 Gew.-%) und 18 g Wasser gemischt. Man läßt 60 Minuten ruhen damit sich eine intensiv gelbe Verbindung mit einem Absorptionsmaximum bei 386 nm bilden kann. Titandioxidpartikel werden mit dieser Methode nicht erfaßt. Es wird in einer 10 mm Küvette die Extinktion bei 386 nm gemessen (UV/VIS/NIR Spektrometer Lambda 950S, PerkinElmer).

Um das Titandioxidsols aufzukonzentrieren und einen Teil der Salze zu entfernen wird eine Vivaflow 200 Crossflow-Einheit, Satorius mit einer Polyethersulfonmembran mit 5000 Dalton verwendet.

Bei einem Druck von ca. 3 bar wird ein konzentriertes stabiles Titandioxidsol mit 20,5 Gew.-% TiO₂ erhalten. Das Titandioxidsols ist transparent. Die Teilchengröße, gemessen als z-Average (intensitätsgewichteter Mittelwert), liegt bei 7 nm, gemessen mit dynamischer Lichtstreuung am Zetasizer Nano S von Malvern Instruments.

## Patentansprüche

1. Wässerige Lösung enthaltend Tetra-n-propylammoniumtitanat.

2. Wässerige Lösung nach Anspruch 1, **dadurch gekennzeichnet, dass** der Anteil an Tetra-n-propylammoniumtitanat, gerechnet als TiO₂, 5 bis 35 Gew.-% beträgt.

3. Wässerige Lösung nach Anspruch 1 oder 2, **dadurch gekennzeichnet, dass** das Tetra-n-propylammoniumtitanat Verbindungen der Zusammensetzung 2(CH₃CH₂CH₂)₄N⁺ Ti₁₈O₃₇²⁻ umfasst.

4. Wässerige Lösung nach den Ansprüchen 1 bis 3, **dadurch gekennzeichnet, dass** sie Tetra-n-propylammoniumhydroxid enthält.

5. Wässerige Lösung nach den Ansprüchen 1 bis 4, **dadurch gekennzeichnet, dass** ihr pH-Wert mindestens 12 ist.

6. Verfahren zur Herstellung der wässerigen Lösung gemäß der Ansprüche 1 bis 5, **dadurch gekennzeichnet, dass** man
zu einer wässerigen, Tetra-n-propylammoniumhydroxid enthaltenden Lösung unter Bewegung Ti(OR)₄ mit R= CH₃, C₂H₅ oder C₃H₇ zudosiert und nachfolgend das Reaktionsgemisch im Vakuum Alkohol ROH aus dem Reaktionsgemisch abdestilliert.

7. Dispersion enthaltend Tetra-n-propylammoniumtitanat, Tetra-n-propylammoniumhydroxid, pyrogene Kieselsäure und Wasser.

8. Dispersion nach Anspruch 7, **dadurch gekennzeichnet, dass**
das molare Verhältnis von pyrogener Kieselsäure, als SiO₂, zu Tetra-n-propylammoniumtitanat, als TiO₂, 90:10 bis 99:1 ist.

9. Dispersion nach den Ansprüchen 7 oder 8, **dadurch gekennzeichnet, dass** das molare Verhältnis von pyrogener Kieselsäure, als SiO₂ zu Tetra-n-propylammoniumhydroxid 80:20 bis 90:10 ist.

10. Dispersion nach Anspruch 7 bis 9, **dadurch gekennzeichnet, dass** das molare Verhältnis von pyrogener Kieselsäure, als SiO₂, zu Wasser 90:10 bis 97:3 ist.

11. Verfahren zur Herstellung der Dispersion gemäß der Ansprüche 7 bis 10, **dadurch gekennzeichnet, dass**
man Tetra-n-propylammoniumtitanat in Form der wässerigen Lösung gemäß der Ansprüche 1 bis 4 einsetzt.

12. Verfahren nach Anspruch 11, **dadurch gekennzeichnet, dass**
man die pyrogene Kieselsäure in Form einer Tetra-n-propylammoniumhydroxid enthaltenden Dispersion einsetzt.

13. Verfahren zur Herstellung der Dispersion gemäß Anspruch 7, **dadurch gekennzeichnet, dass**, man
a) zu einer aus einer Vorlage über eine Rotor-/ Statormaschine im Kreis geführten flüssigen Phase aus Wasser und Tetra-n-propylammoniumhydroxid, das in einer Menge vorliegt, dass der pH-Wert 10 bis 12 ist,
b) über eine Einfüllvorrichtung bei laufender Rotor-/ Statormaschine eine solche Menge pyrogener Kieselsäure in die Scherzone zwischen den Schlitzen der Rotorzähne und der Statorschlitze einbringt, dass eine Dispersion mit einem Gehalt an pyrogener Kieselsäure von 20 bis 30 Gew.-% resultiert, wobei man den pH-Wert durch kontinuierliche, weitere Zugabe von Tetra-n-propylammoniumhydroxid auf 10 bis 12 hält, und
c) man nachdem alle pyrogene Kieselsäure zugegeben ist, die Einfüllvorrichtung schließt und so weiterschert, dass die Scherrate im Bereich zwischen 10000 bis 40000 s⁻¹ liegt, und
d) anschließend gegebenenfalls Wasser und/oder weiteres Tetra-n-propylammoniumhydroxid hinzugibt um den Gehalt an pyrogener Kieselsäure und den pH-Wert einzustellen und nachfolgend
e) unter Rühren die Lösung gemäß der Ansprüche 1 bis 4 in einer Menge hinzufügt, dass das molare Verhältnis SiO₂/TiO₂ 90:10 bis 99:1, das molare Verhältnis SiO₂/Tetra-n-propylammoniumhydroxid 80:20 bis 90:10 und das molare Verhältnis Wasser/SiO₂ 90:10 bis 97:3 ist.

14. Verfahren zur Herstellung eines titanhaltigen Zeolithen, **dadurch gekennzeichnet, dass** man die Dispersion gemäß der Ansprüche 6 bis 10 thermisch behandelt.

15. Verfahren zur Herstellung eines Titandioxidsoles, **dadurch gekennzeichnet, dass** man den pH-Wert der Lösung gemäß der Ansprüche 1 bis 4 auf einen pH-Wert 2 bis 8 einstellt und nachfolgend thermisch behandelt.
